# EUROPÄISCHE PATENTSCHRIFT

(11) **EP 0 898 089 B1**
(45) Veröffentlichungstag und Bekanntmachung des Hinweises auf die Patenterteilung: **13.08.2003**
(21) Anmeldenummer: 98111323.6
(22) Anmeldetag: 19.06.1998
(51) Int. Cl.: F16B 12/20

(54) **Einteiliger Beschlag**
Single part fitting
Montage d'une seule pièce

(30) Priorität: 19.08.1997 DE 29714853 U
(43) Veröffentlichungstag der Anmeldung: 24.02.1999
(73) Patentinhaber: HÄFELE GmbH & Co., D-72202 Nagold (DE)
(72) Erfinder: Häsler, Georg, 72202 Nagold (DE)
(74) Vertreter: KOHLER SCHMID + PARTNER

(56) Entgegenhaltungen:
- GB-A- 2 080 907
- GB-A- 2 277 973
- US-A- 4 944 627
- "DOUBLE LOCKING SNAIL CAM FIXING" RESEARCH DISCLOSURE,GB,INDUSTRIAL OPPORTUNITIES LTD. HAVANT, Nr. 389, 1. September 1996 (1996-09-01), Seite 534 XP000635458 ISSN: 0374-4353

## Beschreibung

Die Erfindung betrifft einen Beschlag zum Verbinden zweier Teile, insbesondere Möbelplatten, mit einem am ersten Teil befestigbaren Einbauelement und mit einem im Einbauelement verdrehbar gelagerten Betätigungselement, mittels dem ein am zweiten Teil befestigtes Verbindungselement im Einbauelement gehalten werden kann, wobei der Beschlog einteilig ausgebildet ist. Ein solcher Beschlag ist aus der Druckschrift GB-A-2 277 973 bekannt.

Zum Befestigen zweier rechtwinklig zueinander verlaufender Möbelplatten greift bei bekannten Beschlägen ein an der zweiten Möbelplatte befestigtes Verbindungselement in einen an der ersten Möbelplatte angeordneten Beschlag ein. Mit Hilfe eines im Einbauelement drehbar gelagerten Betätigungselements, welches durch Verdrehen vom Verbindungselement hintergriffen wird, wird das Verbindungselement innerhalb des Beschlags gehalten und dabei vorzugsweise noch weiter ins Innere des Einbauelements gezogen, wodurch es im Einbauelement festgespannt ist.

Die US-A-4 944 627 zeigt zwar, allerdings bei einer völlig anderen Konstruktion, die unverlierbare Verbindung eines in einem Einsatzelement drehbar gelagerten Bolzen. Jedoch muss jedes der Teile gesondert hergestellt werden und dann kann erst das Zusammensetzen erfolgen. Die Unverlierbarkeit wird dabei durch zusätzliche Haltemittel wie Dorne oder Membranen erreicht.

Demgegenüber ist es die Aufgabe der vorliegenden Erfindung, den Beschlag der eingangs genannten Art derart weiterzubilden, dass das Betätigungselement und das Einbauelement mit einem relativ einfachen Spritzwerkzeug in einem einzigen Spritzvorgang so hergestellt werden können, dass die Teile einerseits unverlierbar sind und andererseits auf einfache Weise in ihre endgültige Lage gebracht werden können. Dies wird erfindungsgemäß durch die Merkmale des kennzeichnenden Teiles des Hauptanspruches erreicht.

Der erfindungsgemäße Beschlag ist einteilig und kann durch Zerstören der mindestens einen Sollbruchstelle - entweder beim Hersteller oder beim Anwender - und durch Zusammenfügen des Einbauelements und des Betätigungselements in einen montagefertigen zweiteiligen Beschlag überführt werden. Vorzugsweise ist der Beschlag ein Kunststoff-Spritzgußteil, so daß zu seiner Herstellung lediglich ein einziges Spritzwerkzeug erforderlich ist, oder ein Zinkdruckgußteil.

Nach der Erfindung sind das Einbauelement und das Betätigungselement unter Bruch der mindestens einen Sollbruchstelle zusammenfügbar, vorzugsweise in Zusammenfügerichtung zusammenschiebbar. Durch Schlag oder Druck auf eines der beiden Elemente wird die mindestens eine Sollbruchstelle aufgebrochen, und beide Elemente werden zu einem montagefertigen zweiteiligen Beschlag zusammengepreßt bzw. zusammengefügt. Ist der Beschlag vom Hersteller schon montiert, d.h. zusammengedrückt, so braucht der Beschlag vom Anwender nur noch in eine entsprechende Bohrung im ersten Teil eingedrückt zu werden. Andernfalls wird der noch einteilige Beschlag auf die Bohrung aufgesetzt und durch Schlag oder Druck unter gleichzeitigem Zusammenfügen seiner beiden Elemente in die Bohrung eingedrückt.

Gemäß der Erfindung sind das Einbauelement und das Betätigungselement in Richtung der Drehachse des Betätigungselements zusammenfügbar.

Um das Betätigungselement beim Zusammenfügen im Einbauelement führen zu können, ist das Einbauelement ringförmig ausgebildet, in dessen Öffnung das Betätigungselement dann hineinrutschen kann.

Damit das Einbauelement und das Betätigungselement nach ihrem Zusammenfügen miteinander unverlierbar verbunden sind und weiterhin eine einstückige Einheit bilden, ist bei vorteilhaften Ausführungsformen der Erfindung vorgesehen, daß das Einbauelement und das Betätigungselement im zusammengefügten Zustand miteinander verrastet sind.

Dazu kann am Betätigungselement mindestens ein Rastvorsprung vorgesehen sein, der nach Zerstörung der mindestens einen Sollbruchstelle das Einbauelement verrastend hintergreift. Gleichzeitig kann dieser Rastvorsprung auch die Drehbewegung des Betätigungselements begrenzen. Der Rastvorsprung kann aber auch am Einbauelement vorgesehen sein.

Um zwischen Einbauelement und Betätigungselement eine möglichst großflächig wirkende Sollbruchstelle auszubilden, können mehrere Sollbruchstellen vorgesehen sein. Möglich ist auch eine einzige zwischen Einbauelement und Betätigungselement vorgesehene ringförmige Sollbruchstelle. Dabei ist die mindestens eine Sollbruchstelle vorzugsweise zwischen Innenumfang des Einbauelements und Außenumfang des Betätigungselements vorgesehen.

Damit die beim Zusammenfügen bzw. -pressen wirkenden Schlagoder Druckkräfte nicht zu Beschädigungen des Beschlags führen, weisen das Einbauelement und das Betätigungselement jeweils einander in Zusammenfügerichtung gegenüberliegende parallele Anlageflächen auf. Diese Anlageflächen sind möglichst großflächig ausgebildet und erstrecken sich z.B. ringförmig oder ringsegmentförmig, um einerseits die Schlag- oder Druckkräfte großflächig aufnehmen und im zusammengefügten Zustand Führungsflächen für die Drehbewegung des Betätigungselements bilden zu können.

Das Verbindungselement kann entweder bereits vor Zerstörung der mindestens einen Sollbruchstelle in seine das Einbauelement hintergreifende Lage gebracht ein oder, sofern dies aus baulichen Gründen vorher nicht möglich ist, erst nach Zusammenfügen beider Elemente nachträglich in diese hintergreifende Lage gebracht werden. Um insbesondere dieses nachträgliche Einfügen des Verbindungselements zu erleichtern, ist zwischen Einbauelement und Betätigungselement eine radial nach außen offene Einfügekammer für das Verbindungselement vorgesehen, die auch bei zusammengefügtem Beschlag das Einfügen des Verbindungselements ermöglicht. Auf diese Weise kann das Verbindungselement entweder von vorn, d.h. radial, oder stirnseitig, d.h. axial, in die Einfügekammer eingeführt werden.

Um das axiale Einführen von der Stirnseite des Betätigungselements her zu ermöglichen, sind in seiner Oberseite mindestens eine, vorzugsweise zwei, in die Einfügekammer auf schwenkbare Gehäusezungen vorgesehen. Durch axialen Druck von außen auf diese Gehäusezungen schwenken diese flügeltürenartig auf und schwenken nach dem Einführen des Verbindungselements in die Einfügekammer in ihre die Einfügekammer verschließende Ausgangslage selbsttätig wieder zurück.

Bei bevorzugten Ausführungsformen der Erfindung ist im Einbauelement eine seitliche Führungswand für das eine Wand des Einbauelements hintergreifende Verbindungselement vorgesehen. Dabei ist die seitliche Führung vorzugsweise auf die Querschnittskontur des Verbindungselements, z.B. an den Kopf eines Verbindungsbolzens, angepaßt, um das Verbindungselement besser führen zu können.

Wenn das Einbauelement und das Betätigungselement zueinander in einer zur Aufnahme des Verbindungselements bereiten Drehstellung bereits vororientiert sind, so befindet sich auch der nach Zusammenfügen seiner beiden Elemente nun zweiteilige Beschlag bereits in seiner das Verbindungselement aufnehmenden Drehposition.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: in einer Ansicht schräg von oben den erfindungsgemäßen einteiligen Beschlag, bei dem das Einbauelement und das Betätigungselement noch miteinander verbunden sind;
- Fig. 2: einen Längsschnitt durch den einteiligen Beschlag der Fig. 1;
- Fig. 3: eine Ansicht von unten auf den einteiligen Beschlag gemäß III in Fig. 2;
- Fig. 4: in einer Ansicht schräg von oben den durch Zusammenfügen von Einbauelement und Betätigungselement gebildeten, nun zweiteiligen erfindungsgemäßen Beschlag;
- Fig. 5: eine Seitenansicht des erfindungsgemäßen einteiligen Beschlags vor seinem Einsetzen in eine Bohrung eines ersten Teils;
- Fig. 6: in einer der Fig. 5 entsprechenden Seitenansicht den zusammengefügten, in der Bohrung des ersten Teils versenkten zweiteiligen Beschlag; und
- Fig. 7: zwei miteinander zu verbindende Teile, wobei der Beschlag in einer Bohrung des ersten Teils versenkt und ein mit dem Beschlag zusammenwirkendes Verbindungselement am zweiten Teil befestigt ist.

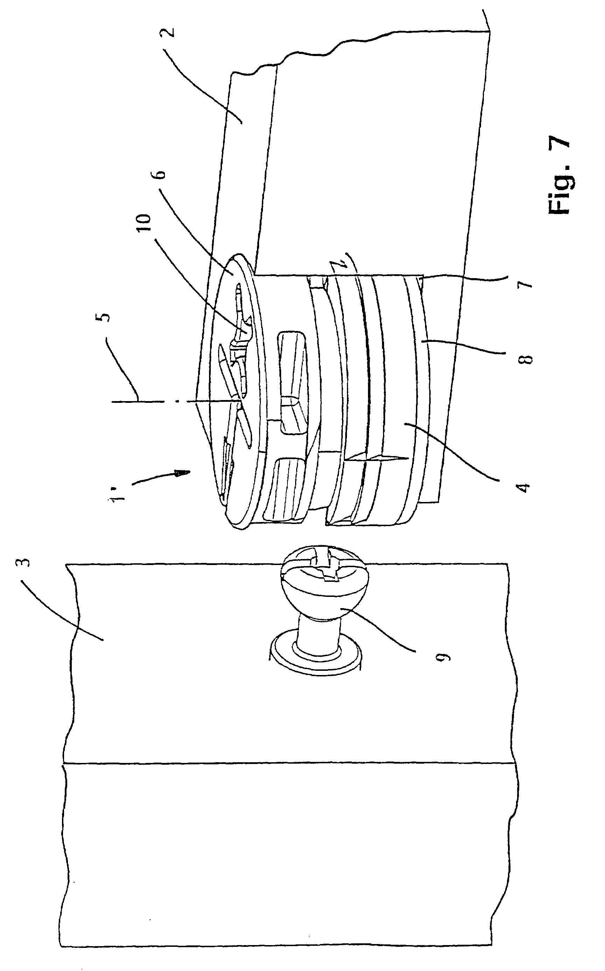

In Fig. 7 ist mit **1'** ein an sich bekannter Beschlag gezeigt, der zum Verbinden zweier Teile **2, 3** dient. Der Beschlag 1' weist ein Einbauelement **4** und ein um eine Drehachse **5** verdrehbar im Einbauelement 4 gelagertes Betätigungselement **6** auf. Der Beschlag 1' ist in eine Bohrung **7** im ersten Teil 2 versenkt, wobei eine Umfangsphase **8** das Einführen des Einbauelements 4 in die Bohrung 7 erleichtert. Zum Verbinden der beiden Teile 2, 3 greift ein am zweiten Teil 3 vorgesehenes Verbindungselement **9**, z.B. ein Verbindungsbolzen mit Bolzenkopf, in den Beschlag 1' ein und wird durch Verdrehen des Betätigungselements 6 weiter in das Innere des Beschlags 1' gezogen und festgespannt. Zum Verdrehen des Betätigungselements 6 dient eine kreuzschlitzförmige Betätigungsaufnahme **10.**

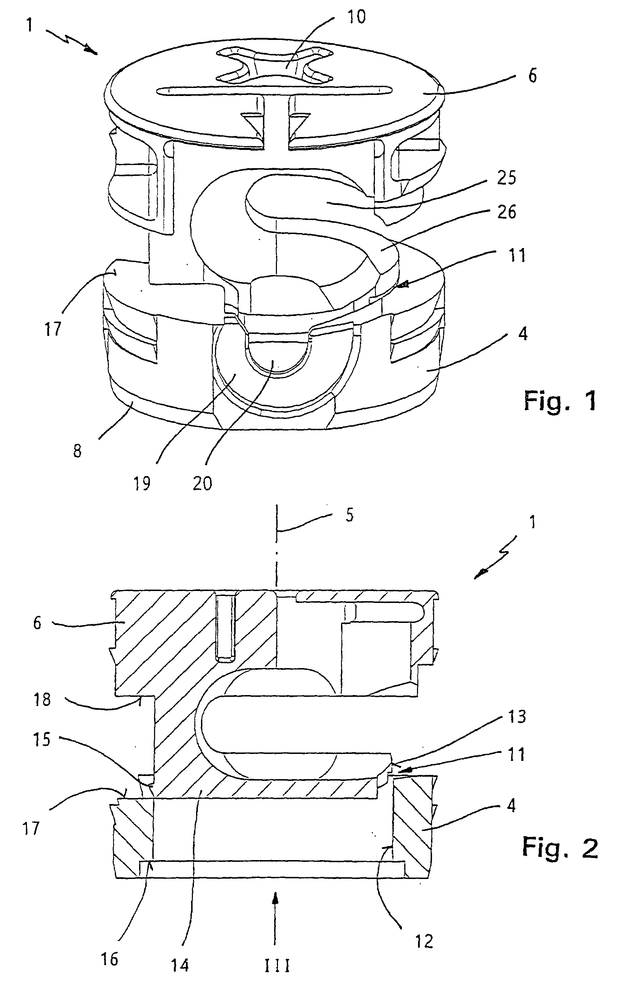

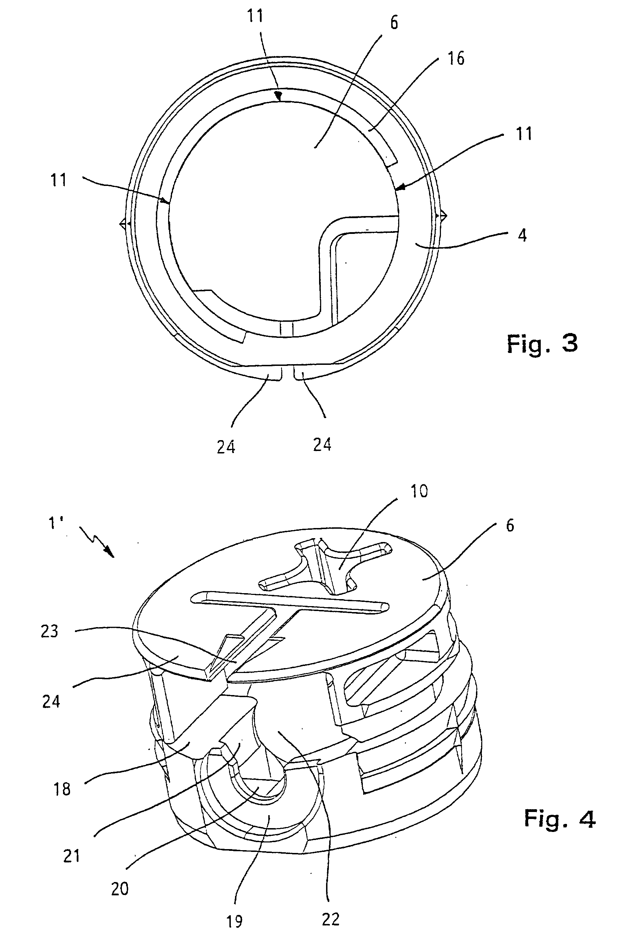

Der in Fig. 7 gezeigte zweiteilige Beschlag 1' ist durch den in den Fign. 1 bis 3 gezeigten einteiligen Beschlag 1 gebildet, bei dem das Einbauelement 4 und das Betätigungselement 6 über Sollbruchstellen **11** noch miteinander verbunden sind. Entsprechend den Fign. 2 und 3 sind zwischen dem Innenumfang **12** des ringförmigen Einbauelements 4 und dem runden Außenumfang **13** des vorderen Endes **14** des Betätigungselements 6 drei Sollbruchstellen 11 vorgesehen. Durch Krafteinwirkung in Richtung der Drehachse 5 werden die Sollbruchstellen 11 zerstört und das Einbauelement 4 und das Betätigungselement 6 zusammengefügt. Damit die beiden Elemente 4, 6 dauerhaft zusammengefügt bleiben, ist am Außenumfang des vorderen Endes 14 ein Rastvorsprung **15** vorgesehen, der in der zusammengefügten Position eine Anlageschulter **16** des Einbauelements 4 verrastend hintergreift. Da sich diese Anlageschulter 16 nicht über den gesamten Umfang des vorderen Endes 14, sondern nur um etwa 150° erstreckt (Fig. 3), ist auch der Drehbereich des Betätigungselements 6 durch Zusammenwirken mit dem Rastvorsprung 15 entsprechend begrenzt.

Beim Zusammenfügen der beiden Elemente 4, 6 rutscht das Betätigungselement 6 mit seinem vorderen Ende 14 in die Öffnung des ringförmigen Einbauelements 4 hinein, und das vordere Ende 14 ist darin in der zusammengefügten Position verdrehbar gelagert. Über großflächige parallele Anlageflächen **17** und **18** des Einbauelements 4 bzw. des Betätigungselements 6 werden die beim Zusammenfügen in Richtung der Drehachse 5 wirkenden Kräfte optimal aufgefangen.

Beim einteiligen Beschlag 1 sind das Einbauelement 4 und das Betätigungselement 6 so zueinander vororientiert, daß sich auch der zusammengefügte Beschlag 1' bereits in seiner das Verbindungselement 9 aufnehmenden Drehposition befindet. Das Verbindungselement 9 hintergreift eine Umfangswand **19** des Einbauelements 4 und ist über eine halbrunde Lageröffnung **20** und eine seitliche linke Führungswand **21** innerhalb des Einbauelements 4 gelagert. Das Verbindungselement 9 kann über eine radial nach außen offene Einfügekammer **22** in die Lageröffnung 20 angeordnet werden. Es kann entweder umfangsseitig, d.h. radial, in die Einfügekammer 22 oder in Richtung der Drehachse 5, d.h. axial, eingeführt werden. Dazu weist die Oberseite des Betätigungselements 6 zwei, durch einen T-förmigen Schlitz **23** gebildete Gehäusezungen **24** auf, die flügeltürenartig in die Einfügekammer 22 aufschwenkbar sind und so das axiale Einführen des Verbindungselements 9 in die Einfügekammer 22 ermöglichen. Der T-förmige Schlitz 23 ist dabei an den Bolzenkopf des Verbindungselements 9 angepaßt.

Durch Verdrehen des Betätigungselements 6 wird das Verbindungselement 9 innerhalb der Lageröffnung 20 und einer schlitzförmigen Öffnung **25** im Betätigungselement 6 gehalten, deren schräge Öffnungswände **26** es hintergreift. Aufgrund dieser schrägen Öffnungswände 26 wird das Verbindungselement 9 durch Verdrehen des Betätigungselements 6 noch weiter nach innen in Richtung auf die Drehachse 5 gespannt.

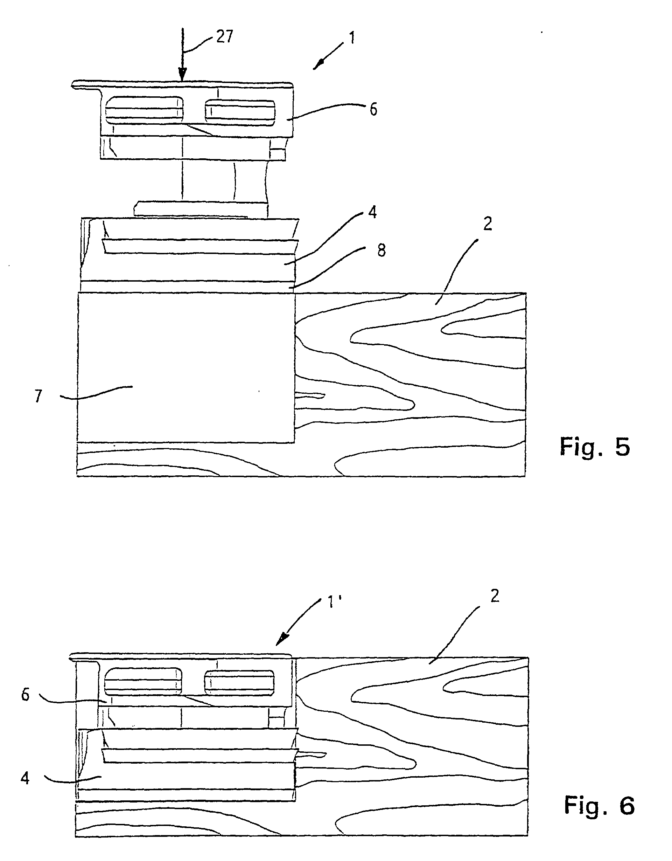

Ist der Beschlag 1 vom Hersteller bereits montiert, d.h. zusammengefügt, so braucht er vom Anwender nur noch in die Bohrung 7 des ersten Teils 2 eingedrückt zu werden. Andernfalls wird der noch einteilige Beschlag 1 auf die Bohrung 7 aufgesetzt (Fig. 5) und durch in Zusammenfügerichtung **27** erfolgenden Schlag oder Druck auf die Oberseite des Betätigungselements 6 unter gleichzeitigem Zusammenfügen des Einbauelements 4 und des Betätigungselements 6 in die Bohrung als zweiteiliger Beschlag 1' eingedrückt (Fig. 6).

## Patentansprüche

1. Beschlag (1) zum Verbinden zweier Teile (2, 3), insbesondere Möbelplatten, mit einem am ersten Teil (2) befestigbaren Einbauelement (4) und mit einem im Einbauelement (4) verdrehbar gelagerten Betätigungselement (6), mittels dem ein am zweiten Teil (3) befestigtes Verbindungselement (9) im Einbauelement (4) gehalten werden kann, wobei
der Beschlag einteilig ausgebildet ist, **dadurch gekennzeichnet, daß** das Einbauelement (4) und das Betätigungselement (6) über mindestens eine Sollbruchstelle (11) miteinander verbunden sind und das Einbauelement (4) und das Betätigungselement (6) unter Bruch der mindestens einen Sollbruchstelle (11) in Richtung der Drehachse (5) des Betätigungselements (6) zusammenfügbar sind.

2. Beschlag nach Anspruch 1, **dadurch gekennzeichnet, daß** das Einbauelement (4) ringförmig ausgebildet ist.

3. Beschlag nach einem der vorhergehenden Ansprüche, **dadurch gekennzeichnet, daß** das Einbauelement (4) und das Betätigungselement (6) im zusammengefügten Zustand miteinander verrastet sind.

4. Beschlag nach Anspruch 3, **dadurch gekennzeichnet, daß** am Betätigungselement (6) mindestens ein Rastvorsprung (15) zum Hintergreifen des Einbauelements (4) vorgesehen ist.

5. Beschlag nach einem der vorhergehenden Ansprüche, **dadurch gekennzeichnet, daß** mehrere Sollbruchstellen (11) zwischen Einbauelement (4) und Betätigungselement (6) vorgesehen sind.

6. Beschlag nach einem der vorhergehenden Ansprüche, **dadurch gekennzeichnet, daß** die mindestens eine Sollbruchstelle (11) zwischen Innenumfang (12) des Einbauelements (4) und Außenumfang (13) des Betätigungselements (6) vorgesehen ist.

7. Beschlag nach einem der vorhergehenden Ansprüche, **dadurch gekennzeichnet, daß** das Einbauelement (4) und das Betätigungselement (6) jeweils einander in Zusammenfügerichtung (27) gegenüberliegende, insbesondere ringförmige oder ringsegmentförmige, parallele Anlageflächen (17, 18) aufweisen.

8. Beschlag nach einem der vorhergehenden Ansprüche, **dadurch gekennzeichnet, daß** zwischen Einbauelement (4) und Betätigungselement (6) eine radial nach außen offene Einfügekammer (22) für das Verbindungselement (9) vorgesehen ist.

9. Beschlag nach Anspruch 8, **dadurch gekennzeichnet, daß** in der Oberseite des Betätigungselements (6) mindestens eine, vorzugsweise zwei, in die Einfügekammer (22) aufschwenkbare Gehäusezungen (24) vorgesehen sind.

10. Beschlag nach einem der vorhergehenden Ansprüche, **dadurch gekennzeichnet, daß** im Einbauelement (4) eine seitliche Führungswand (21) für das Verbindungselement (9) vorgesehen ist.

11. Beschlag nach einem der vorhergehenden Ansprüche, **dadurch gekennzeichnet, daß** das Einbauelement (4) und das Betätigungselement (6) zueinander in einer zur Aufnahme des Verbindungselements (9) bereiten Drehstellung vororientiert sind.

## Claims

1. Fitting (1) for connecting two components (2, 3), in particular furniture panels, having an installation element (4) which can be fixed to the first component (2), and having an operating element (6) which is supported rotatably in the installation element (4), by means of which fitting (1) a connecting element (9) fixed to the second component (3) can be held in the installation element (4), the fitting being constructed in one piece, **characterised in that** the installation element (4) and the operating element (6) are connected to each other by way of at least one desired breaking point (11), and the installation element (4) and the operating element (6) can be joined together with breaking of the at least one desired breaking point (11) in the direction of the axis of rotation (5) of the operating element (6).

2. Fitting according to claim 1, **characterised in that** the installation element (4) is of annular form.

3. Fitting according to either of the preceding claims, **characterised in that** the installation element (4) and the operating element (6) are locked together in the joined-together state.

4. Fitting according to claim 3, **characterised in that** at least one locking projection (15) for engaging behind the installation element (4) is provided on the operating element (6).

5. Fitting according to any one of the preceding claims, **characterised in that** a plurality of desired breaking points (11) are provided between the installation element (4) and the operating element (6).

6. Fitting according to any one of the preceding claims, **characterised in that** the at least one desired breaking point (11) is provided between the internal periphery (12) of the installation element (4) and the external periphery (13) of the operating element (6).

7. Fitting according to any one of the preceding claims, **characterised in that** the installation element (4) and the operating element (6) have respective parallel contact faces (17, 18), which are in particular ring-shaped or ring-segment-shaped and which are opposite each other in the joining direction (27).

8. Fitting according to any one of the preceding claims, **characterised in that** an insertion chamber (22) which is open radially towards the outside is provided for the connecting element (9) between the installation element (4) and the operating element (6).

9. Fitting according to claim 8, **characterised in that** at least one, preferably two, housing tongue(s) (24) which can be pivoted upwards into the insertion chamber (22) are provided in the upper side of the operating element (6).

10. Fitting according to any one of the preceding claims, **characterised in that** a lateral guiding wall (21) for the connecting element (9) is provided in the installation element (4).

11. Fitting according to any one of the preceding claims, **characterised in that** the installation element (4) and the operating element (6) are pre-orientated relative to each other in a rotation position ready to receive the connecting element (9).

## Revendications

1. Armature (1) pour relier deux pièces (2, 3), en particulier des plaques de meuble, comprenant un élément d'encastrement (4) fixable sur la première pièce (2) et un élément de manoeuvre (6) qui est supporté de manière à pouvoir toumer dans l'élément d'encastrement (4) et au moyen duquel un élément de liaison (9) fixé sur la deuxième pièce (3) peut être maintenu dans l'élément d'encastrement (4), l'armature étant réalisée d'une pièce, **caractérisée en ce que** l'élément d'encastrement (4) et l'élément de manoeuvre (6) sont mutuellement reliés par l'intermédiaire d'au moins un emplacement destiné à la rupture (11) et **en ce que** l'élément d'encastrement (4) et l'élément de manoeuvre (6) peuvent, lors de la brisure du au moins un emplacement destiné à la rupture (11), être assemblés en suivant la direction de l'axe de rotation (5) de l'élément de manoeuvre (6).

2. Armature suivant la revendication 1, **caractérisée en ce que** l'élément d'encastrement (4) est réalisé sous une forme annulaire.

3. Armature suivant l'une des revendications précédentes, **caractérisée en ce que** l'élément d'encastrement (4) et l'élément de manoeuvre (6) sont mutuellement enclenchés à l'état assemblé.

4. Armature suivant la revendication 3, **caractérisée en ce qu'**une saillie d'enclenchement (15) destinée à prendre derrière l'élément d'encastrement (4) est prévue sur l'élément de manoeuvre (6).

5. Armature suivant l'une des revendications précédentes, **caractérisée en ce que** plusieurs emplacements destinés à la rupture (11) sont prévus entre l'élément d'encastrement (4) et l'élément de manoeuvre (6).

6. Armature suivant l'une des revendications précédentes, **caractérisée en ce que** ledit au moins un emplacement destiné à la rupture (11) est prévu entre une périphérie interne (12) de l'élément d'encastrement (4) et une périphérie externe (13) de l'élément de manoeuvre (6).

7. Armature suivant l'une des revendications précédentes, **caractérisée en ce que** l'élément d'encastrement (4) et l'élément de manoeuvre (6) présentent chacun des surfaces d'appui parallèles (17, 18) en particulier en forme d'anneaux ou de segments d'anneau, qui sont mutuellement opposées dans la direction d'assemblage (27).

8. Armature suivant l'une des revendications précédentes, **caractérisée en ce qu'**un compartiment d'insertion (22) ouvert radialement vers l'extérieur et destiné à l'élément de liaison (9) est prévu entre l'élément d'encastrement (4) et l'élément de manoeuvre (6).

9. Armature suivant la revendication 8, **caractérisée en ce qu'**au moins une, de préférence deux, patte de boîtier capable de pivoter (24) dans le compartiment d'insertion (22) est prévue au côté supérieur de l'élément de manoeuvre (6).

10. Armature suivant l'une des revendications précédentes, **caractérisée en ce qu'**une paroi de guidage latéral (21) pour l'élément de liaison (9) est prévue dans l'élément d'encastrement (4).

11. Armature suivant l'une des revendications précédentes, **caractérisée en ce que** l'élément d'encastrement (4) et l'élément de manoeuvre (6) sont préalablement orientés l'un par rapport à l'autre dans une position de rotation prête à recevoir l'élément de liaison (9).
